Europäisches Patentamt

European Patent Office

Office européen des brevets

(19)

(11) Publication number: **0 063 533**
**A1**

(12) **EUROPEAN PATENT APPLICATION**

(21) Application number: **82630026.1**

(22) Date of filing: **30.03.82**

(51) Int. Cl.³: **H 05 F 3/02**
**B 65 G 17/32**

(30) Priority: **02.04.81 US 250350**

(43) Date of publication of application:
**27.10.82 Bulletin 82/43**

(84) Designated Contracting States:
**DE FR GB IT NL**

(71) Applicant: **REXNORD INC.**
**P.O. Box 2022**
**Milwaukee, Wisconsin 53201(US)**

(72) Inventor: **Hodlewsky, Wasyly G.**
**8250 Fairmont Lane**
**Greendale Wisconsin 53219(US)**

(74) Representative: **Weydert, Robert et al,**
**Office Dennemeyer S.à.r.l. 21-25 Allée Scheffer P.O. Box**
**41**
**Luxembourg(LU)**

(54) **Anti-static chain.**

(57) A chain link (10) for use in an anti-static conveyor comprising a polymeric link part with a dispersion of electrically conductive particles in an amount not affecting a substantial reduction in the tensile strength of the link part as compared with the tensile strength of the same link part made of the polymeric material alone but sufficient to allow discharge of a static electrical charge from the part. The chain (18) may be used in a conveyor including means for electrically grounding the link parts such as by providing electrically conductive wear strips (28) with which the link parts come in contact.

FIG. 4

EP 0 063 533 A1

ANTI-STATIC CHAIN

This invention relates to chain links, and, more particularly, to polymeric parts of chain links with anti-static properties.

Polymeric chains and chain parts have gained in popularity in recent years due to their ability to operate in corrosive environments, their light weight, their economical manufacture, and various other beneficial properties. However, static electricity may develop in cases in which polymeric chain parts slide or rub against other parts or the conveyed articles during the operation of a conveyor. In many conveying applications the buildup of static electrical charge is acceptable, however, a problem may arise when the articles carried by the conveyor are adversely affected by the presence of static electricity such as certain electronic components, printed electronic circuit boards or silicone chips, aerosol cans containing an explosive propellant, and other explosive articles such as munitions. In these cases, it is desirable to remove the static electric charge which builds up on the polymeric chain parts in order to reduce the potential damage to the articles being conveyed as well as possible damage to people and property located near the conveyor should an explosion occur.

The present invention provides a simple means for discharging the static electric charge from a polymeric chain part by dispersing electrically conductive particles in the polymeric material of the link part in an amount not effecting a substantial reduction in the tensile strength of the part as compared with the tensile strength of the same part made of the polymeric material alone but sufficient to allow discharge of static electrical charge when the part is electrically grounded. For purposes of this disclosure a substantial reduction in tensile strength is such that would render the part useless in conveying applications.

While small quantities of electrically conductive particles such as carbon black have been dispersed in polymeric link parts for coloration, the quantity of such particles has been on the order of fractions of a percent by weight of the part which is not enough to discharge static electrical charges from polymeric link parts. The present invention contemplates using such particles of about 1 to 15 percent by weight of link parts.

A more thorough understanding of the present invention will be gained by reading the following description of the preferred embodiments with reference to the accompanying drawings in which:

Figure 1 is a perspective view of the top of a link made in accordance with this invention.

Figure 1A is a perspective view of the bottom of the link shown in Figure 1.

Figure 2 is a magnified, broken away, cross-sectional view of the link shown in Figure 1.

Figure 3 is a bottom view of a chain made from the links shown in Figure 1.

Figure 4 is a top view of the chain shown in Figure 3.

Figure 5 is a side view of a conveyor using the chain of Figure 4.

Figure 6 is a top view of a polymeric top plate made in accordance with this invention.

Figure 7 is a bottom view of a chain using the top plates shown in Figure 6.

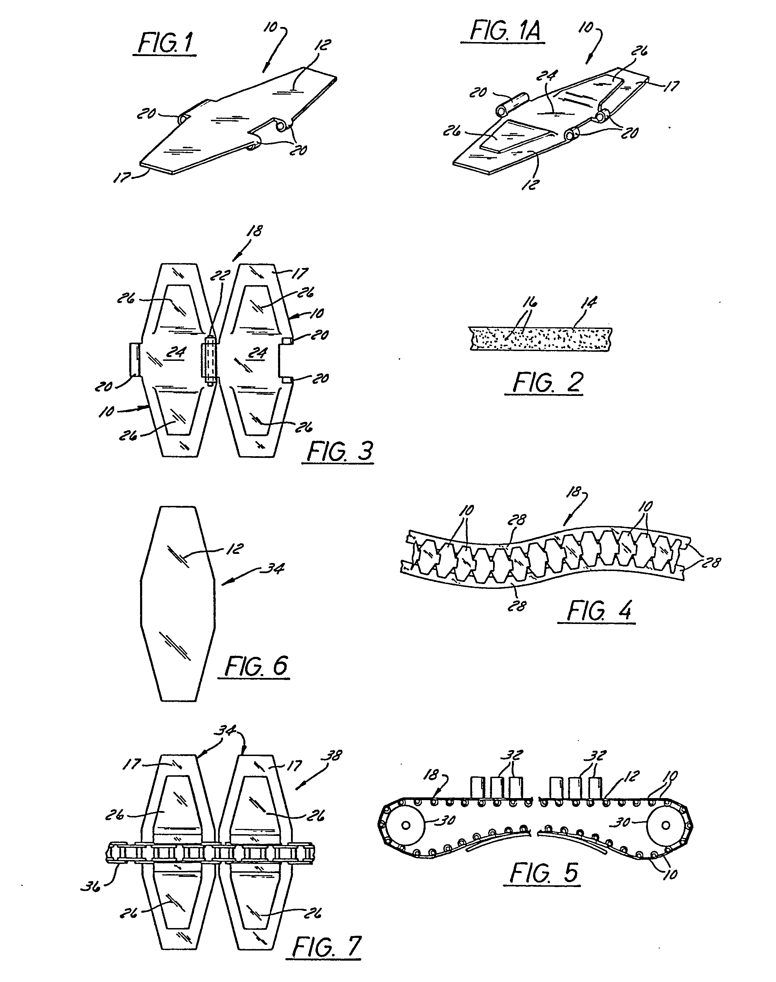

Figure 1 shows a top view of a polymeric link 10 made in accordance with this invention. The example shown is the flat, article-carrying part 12 of a side-flexing type of polymeric link 10, but it is to be understood that many other types of polymeric links 10 or parts of links could also be made in accordance with the present invention. The link 10 in Fig. 1 is made of an injection molded thermoplastic resin 14 that has a dispersion of electrically conductive particles 16 therein resulting in a chain link 10 having the cross-section shown in Fig. 2. In this particular embodiment, the conductive particles 16 are carbon black constituting approximately 5% by weight of the polymeric link part 10. The carbon particles may have a compact, spherical-type of shape, may be irregularly shaped, or may be graphite fibers. It is thought that use of a fibrous type of particle may actually increase the strength of the part. While carbon black particles have been used in this particular example, other conductive materials 16 could be dispersed in the polymer 14 to achieve the same effect. It is believed that, in the case of carbon black, from 1 to 15% by weight carbon black dispersed in the polymer 14 is sufficient to discharge the static electrical charge from the link part 10. While a higher percentage of carbon black particles in the mixture would also discharge the static charges, a higher percentage would tend to mechanically weaken the chain, thereby reducing its usefulness for conveying articles.

Figure 3 illustrates the bottom side 17 of a chain 18 made of a plurality of the links 10 shown in Figures 1 and 1A. It can be seen from these figures that the links 10 are molded in one piece so that there is a dispersion of electrically conductive particles 16 throughout the link 10. Each link 10 has a barrel portion 20 on each edge, and the links 10 are interconnected by connecting pins 22 which extend through the barrel portions 20 of adjacent links 10. The chain 18 may be driven by a conventional sprocket which contacts the central portion 24 of the bottom side 17 of the links 10. The bottom side 17 of the flat, article-carrying portion of the link 10 is smooth and is adapted to slide on top of wear strips 28 which are shown in Figure 4. Tabs 26 are provided on the bottom side 17 of the links 10 and are adapted to slide on the bottom side of the wear strips 28 to help prevent the chain from lifting off of the wear strips when cornering.

Figure 4 is a top view of the chain 18 shown in Figure 3 and shows the flat, article-carrying portion 12 of the links 10 sliding on wear strips 28. The wear strips 28 in this embodiment are made of an electrically conductive material and are electrically grounded. Thus, when a static electrical charge develops on the links 10, the charge is discharged through the conductive particles 16 in the links 10 and through the wear strips 28. This prevents the buildup of a large static charge on the links 10 which could cause arcing that may ignite an explosive atmosphere or damage sensitive electronic components.

Figure 5 illustrates a conveyor using the chain 18 in Fig. 3. Sprockets 30 drive the chain 18 in a conventional manner by contacting the bottom side of the links 10. Articles 32 are carried on top of the flat, article-carrying portion 12 of the links 10.

Figure 6 illustrates a polymeric top plate 34 made in accordance with the present invention. The top plate 34 makes up a part of the link 10 and includes the flat, article-carrying portion 12 of the link 10. Top plate 34 is adapted to be snapped onto a conventional roller chain 36 as shown in Fig. 7. The chain 38 which results when the top plates 34 are snapped onto the roller chain base 36 is similar to the chain 18 shown in Fig. 3 except that top plate 34 is the only part of the chain 38 which is polymeric and has a dispersion of electrically conductive particles 16 in it. This chain 38 is also adapted to be driven by sprockets 30 contacting the bottom side 17 of the chain 38 as in Fig. 5 and is adapted to slide on wear strips 28 as in Fig. 4, with tabs 26 on the bottom side 17 of top plate 34 to help prevent the chain 38 from lifting off of the wear strips 28 in cornering.

The chain 38 in Figs. 6 and 7 may be electrically grounded by grounding the wear strips 28 as previously explained, by grounding the sprockets 30 where the roller chain 36 and sprockets 30 are made of an electrically conductive material, or by other suitable means.

CLAIMS:

1.      A conveyor chain link part comprising a polymeric base material including a dispersion of electrically conductive particles in an amount not effecting a substantial reduction in the tensile strength of the part as compared with the tensile strength of the same link part made of the polymeric material alone; said amount being sufficient to allow discharge of static electrical charge from said link part when said link part is electrically grounded.

2.      A conveyor chain link part as defined in Claim 1 wherein said amount of dispersed electrically conductive particles is about 1 to 15 percent by weight of said link part.

3.      A conveyor chain link part as defined in Claim 1 or 2 wherein said electrically conductive particles are carbon black.

4.      A conveyor chain link part as defined in Claim 1 or 2 wherein said link part comprises a detachable top plate having means for connecting said top plate to a roller chain.

5.      A conveyor chain comprising links interconnected by connecting pins for articulation and having an upper conveying surface; each of said links comprising a link part comprising a polymeric base material including a dispersion of electrically conductive particles in an amount not affecting a substantial reduction in the tensile strength of the link parts as compared with the tensile strength of the link parts made of the polymeric material alone; said amount being sufficient to allow discharge of static electrical charge from said upper conveying surface when said chain links are electrically grounded.

6.      A conveyor chain as defined in Claim 5 wherein said amount of dispersed electrically conductive particles is about 1 to 15 percent by weight of said polymeric link part.

7.      A conveyor chain as defined in Claim 5 or 6 wherein said electrically conductive particles are carbon black.

8.      An anti-static conveyor comprising a conveyor chain including links interconnected by connecting pins for articulation and having an upper conveying surface; each of said links comprising a link part comprising a polymeric base material including a dispersion of electrically conductive particles in an amount not affecting a substantial reduction in the tensile strength of the link part as compared with the tensile strength of link parts made of the polymeric base material alone; said amount being sufficient· to allow discharge of static electrical charge from said upper conveying surface when said chain links are electrically gounded, means for driving said chain and means for electrically grounding said chain.

9.      An anti-static conveyor as defined in Claim 8 wherein said electrical grounding means comprises electrically conductive wear strips mounted to support the upper conveying surface of said links; said wear strips being electrically grounded.

10.     An anti-static conveyor as defined in Claim 8 or 9 wherein said amount of dispersed electrically conductive particles is about 1 to 15 percent by weight of said link.

0063533

82630026.1

FIG. 1

FIG. 1A

FIG. 2

FIG. 3

FIG. 4

FIG. 6

FIG. 5

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 318 441 (WALTON)<br><br>* page 1, column 1, lines 26-34; page 1, column 2, lines 42-57; page 2, column 2, lines 34-38 *<br><br>--- | 1,3,5,<br>7,8 | H 05 F 3/02<br>B 65 G 17/32 |
| X | FR-A-2 306 907 (GRILLO)<br><br>* page 5, lines 10-26 *<br><br>----- | 1,3,5,<br>7,8 | |

TECHNICAL FIELDS
SEARCHED (Int. Cl. ³)

B 65 G
H 05 F

The present search report has been drawn up for all claims

| Place of search | Date of completion of the search | Examiner |
|---|---|---|
| THE HAGUE | 28-06-1982 | OSTYN T.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82